(19) Europäisches Patentamt
European Patent Office
Office européen des brevets

(11) **EP 3 471 258 A1**

(12) **EUROPEAN PATENT APPLICATION**
published in accordance with Art. 153(4) EPC

(43) Date of publication:
**17.04.2019 Bulletin 2019/16**

(51) Int Cl.:
***H02M 7/48*** *(2007.01)*

(21) Application number: **16904658.8**

(22) Date of filing: **10.06.2016**

(86) International application number:
**PCT/JP2016/067305**

(87) International publication number:
**WO 2017/212624 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi Industrial Equipment Systems Co., Ltd.**
**Chiyoda-ku**
**Tokyo 101-0022 (JP)**

(72) Inventors:
• YAGIHARA, Shigetoshi
  Tokyo 101-0022 (JP)
• TANABE, Keisuke
  Tokyo 101-0022 (JP)
• ONUMA, Yusaku
  Tokyo 101-0022 (JP)
• SUGIMOTO, Takuya
  Tokyo 101-0022 (JP)

(74) Representative: **MERH-IP Matias Erny Reichl Hoffmann**
**Patentanwälte PartG mbB**
**Paul-Heyse-Strasse 29**
**80336 München (DE)**

(54) **POWER CONVERTER**

(57) In order to restart an electric motor smoothly from a free-running state without causing shock, the electric motor's frequency and phase need to be detected. Although the frequency and the phase can be detected without involving a sensor by detecting an induced voltage, an offset voltage is generated with respect to a reference voltage when converting the induced voltage into an analog value, resulting in a detection error. Thus, the power converter is provided with: a voltage detector for detecting the voltage of an output terminal of the power converter; a detected voltage generation unit for converting the voltage detected by the voltage detector into an arbitrarily defined voltage; and a control unit for detecting, by using the voltage converted by the detected voltage generation unit, an offset voltage generated at the detected voltage generation unit. The voltage detector detects the induced voltage generated by the electric motor, and the control unit corrects the detection value of the induced voltage by using the offset voltage.

FIG.1

**Description**

TECHNICAL FIELD

The present invention relates to a power converter.

BACKGROUND ART

In recent years, power converters such as inverter are used to drive a motor in order to realize the low-carbon society. A state in which a motor is rotated due to external force of a fan or pump, or a state in which a motor inertially rotates without power of an inverter is called free run state. An inverter needs to smoothly start in a shockless manner even if a motor is in the free run state.

A frequency (revolutions) and a phase of a motor need to be detected in order to smoothly restart. The frequency and the phase can be detected by use of a position sensor, but the position sensor is expensive, and thus there is used a method for detecting a frequency and a phase without a sensor by detecting an induced voltage (residual voltage) occurring during free-running of the motor.

CITATION LIST

PATENT LITERATURE

PATENT LITERATURE 1: JP-A-2009-254093

SUMMARY OF INVENTION

TECHNICAL PROBLEM

There has been conventionally known a method for converting an induced voltage into a pulse thereby to detect a frequency and a phase of a motor. In this method, hysteresis characteristics and a filter circuit need to be provided in order to prevent erroneous detection. Thus, if an induced voltage is lower in a low-frequency band, a detection error increases, and consequently an undetectable region is caused. Therefore, it is difficult to smoothly start in a shockless manner.

It is therefore assumed that an induced voltage is detected in an analog value. Thereby, a frequency and a phase of a motor can be always detected and detection errors can be reduced because the hysteresis characteristics do not need to be provided. However, there is a problem that an offset voltage is caused relative to a reference voltage during conversion into an analog value and a detection error is caused.

Patent Literature 1 describes that "in a voltage detector for detecting an output voltage of a power converter with reference to a negative potential of a DC circuit of the power converter, an output voltage of each phase is detected by the voltage detector thereby to find an offset voltage of each phase while negative potentials are output from all output phases of the power converter at the same time, an output voltage of each phase of the power converter is then detected by the voltage detector while positive potentials are output from all output phases of the power converter at the same time, and the offset voltage of each phase is subtracted from the detected values of the output voltages, respectively, thereby finding an offset compensation voltage of each phase" (refer to Abstract). The present invention is directed for a voltage detector for detecting a voltage (such as induced voltage) input into each phase (output terminal) of a power converter, and is different from Patent Literature 1 in a voltage to be detected. Further, according to Patent Literature 1, it is difficult to correct an error in negative potential as a reference potential of an output voltage in a circuit without a negative potential as a reference.

SOLUTION TO PROBLEM

An outline of a representative invention among the inventions disclosed in the present application will be briefly described below.

A power converter for converting a DC voltage or AC voltage into an arbitrary voltage includes a voltage detector for detecting a voltage of an output terminal of the power converter, a detection voltage generation unit for converting the voltage detected by the voltage detector into an arbitrary voltage, and a control unit for detecting an offset voltage caused in the detection voltage generation unit by use of the voltage converted by the detection voltage generation unit, in which the voltage detector detects an induced voltage caused by a motor, and the control unit corrects the detected value of the induced voltage by use of the offset voltage.

ADVANTAGEOUS EFFECTS OF INVENTION

According to the present invention, it is possible to reduce detection errors of a frequency and a phase of a motor and to smoothly restart the motor in a shockless manner.

The objects, configurations, and effects other than the described ones will be made apparent in the following description of embodiments.

BRIEF DESCRIPTION OF DRAWINGS

FIG. 1 illustrates an exemplary representative configuration of an embodiment.
FIG. 2 is a schematic diagram of a detection voltage detected by an offset generation unit (control unit).
FIG. 3 illustrates an exemplary configuration of a first embodiment.
FIG. 4 illustrates a schematic waveform (not compensated) of a phase voltage for one phase according to the first embodiment.
FIG. 5 illustrates a schematic waveform (not compensated) of a phase voltage for one phase according to the first embodiment.
FIG. 6 is a schematic waveform (compensated) of a phase voltage for one phase according to the first embodiment.
FIG. 7 is an exemplary flowchart illustrating the processing of a control unit according to the first embodiment.
FIG. 8 illustrates an exemplary configuration of a second embodiment.
FIG. 9 is an exemplary flowchart illustrating the processing of a control unit according to the second embodiment.
FIG. 10 illustrates an exemplary configuration of a third embodiment.
FIG. 11 illustrates an exemplary configuration of a virtual neutral point generation unit according to the third embodiment.
FIG. 12 illustrates a schematic waveform (not compensated) of a phase voltage for one phase according to the third embodiment.
FIG. 13 is an exemplary flowchart illustrating the processing of a control unit according to the third embodiment.

DESCRIPTION OF EMBODIMENTS

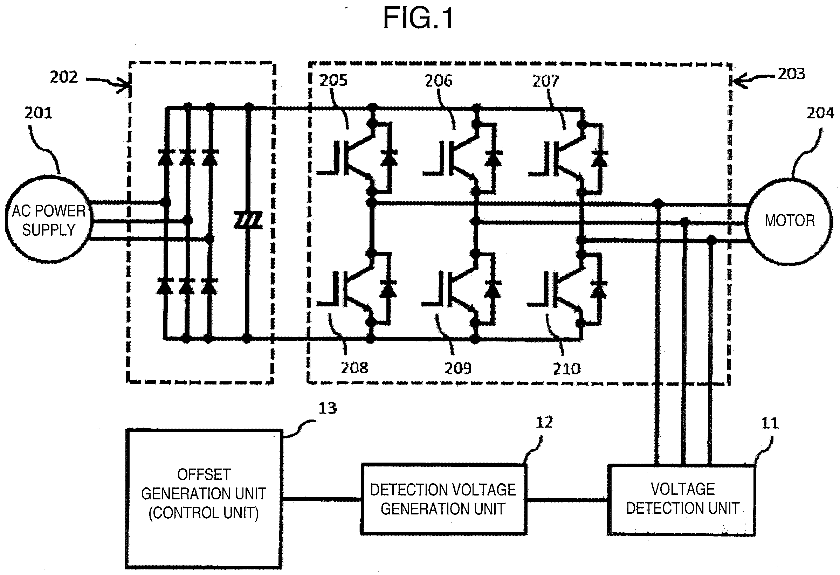

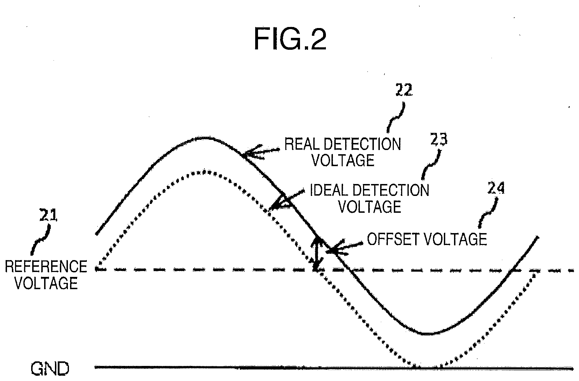

Embodiments of the present invention will be described below with reference to the drawings. FIG. 1 illustrates an exemplary configuration of one embodiment of the present invention, and FIG. 2 is a schematic diagram of a detection voltage detected by an offset generation unit (control unit) 13 of FIG. 1.

FIG. 1 illustrates an exemplary power converter for converting a DC voltage or AC voltage into an arbitrary voltage, to which an AC power supply 201 and a motor 204 are connected. The AC power supply 201 outputs a three-phase AC voltage supplied from an electric power company or an AC voltage supplied from a power generator to a DC conversion unit 202. The DC conversion unit 202 is configured of a DC conversion circuit and a smoothing capacitor. The DC conversion circuit is configured of a circuit using diodes, converts an AC voltage input from the AC power supply 201 into a DC voltage, and outputs the DC voltage to the smoothing capacitor. A circuit using diodes is illustrated in FIG. 1, but a circuit using IGBT and flywheel diode may be employed. The smoothing capacitor smooths the DC voltage and outputs the DC voltage to an AC conversion unit 203. The AC conversion circuit 203 is configured of AC conversion circuits 205 to 210 each using IGBT and flywheel diode, for example, converts DC power into AC power with an arbitrary frequency, and outputs the AC power to the motor 204.

When the motor 204 connected to the output terminals of the power converter is rotating in the free run state, an induced voltage is caused by the motor. A flow from detection of the induced voltage until restarting will be described below by way of example.

A voltage detection unit 11 detects an induced voltage input from the output terminal, and converts it into a voltage capable of being input into the control unit 13. A detection voltage generation unit 12 sets a reference voltage for the converted voltage, converts it into a phase voltage or line voltage, and inputs it into the control unit 13. The control unit 13 computes the input value, and calculates a frequency and a phase of the induced voltage. The frequency (revolutions of the motor) and the phase are synchronized with the output voltage, thereby restarting in a shockless manner.

However, when the induced voltage is detected in an analog value, an offset voltage is caused in the voltage detection unit 11 and the detection voltage generation unit 12. Thus, a value in which an offset voltage 24 is superimposed on an ideal detection voltage 23 as illustrated in FIG. 2 is detected as a real detection voltage 22 input into the offset generation unit (control unit) 13 illustrated in FIG. 1. An error is caused in calculating the frequency and the phase due to the offset voltage, and thus the control unit 13 cannot generate an output voltage synchronized with the induced voltage. Thereby, excessive current flows in the motor, and shockless restarting cannot be performed.

A method for previously detecting the offset voltage 24 and correcting the detected value of the induced voltage by use of the detected offset voltage will be described below according to the embodiments. Further, according to the embodiments, the detection voltage generation unit 12 has a circuit configuration for generating and inputting a phase voltage into the offset generation unit (control unit) 13. However, the present invention can be variously modified, and is not limited to the forms according to the embodiments.

FIRST EMBODIMENT

A first embodiment assumes a circuit configuration for generating a virtual neutral point. All of the three-phase lower arms are turned on, and output negative potentials to all output phases of the power converter to be in the three-phase equilibrium state. A method for detecting an offset voltage will be described assuming that a reference voltage input into a control unit is equal to a virtual neutral point.

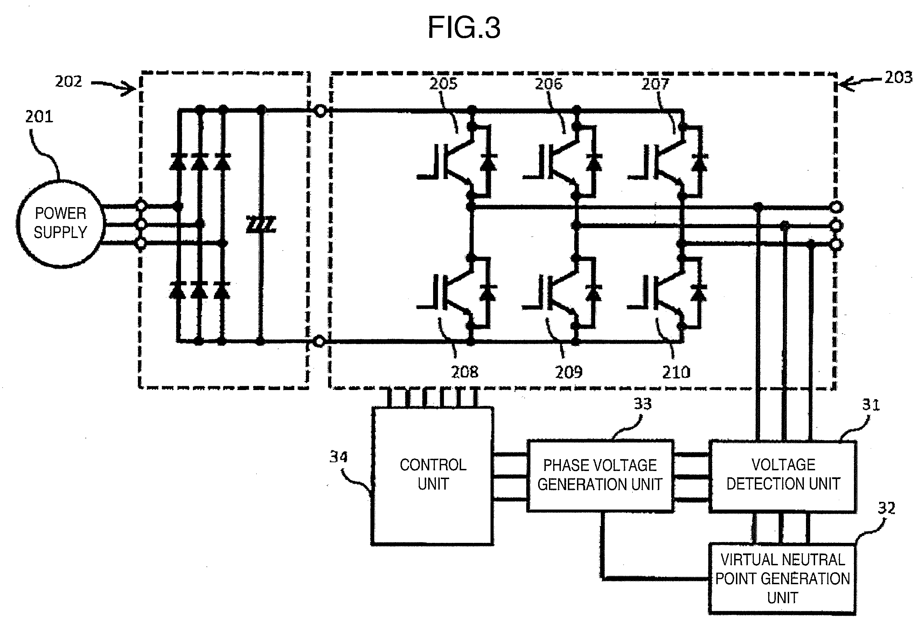

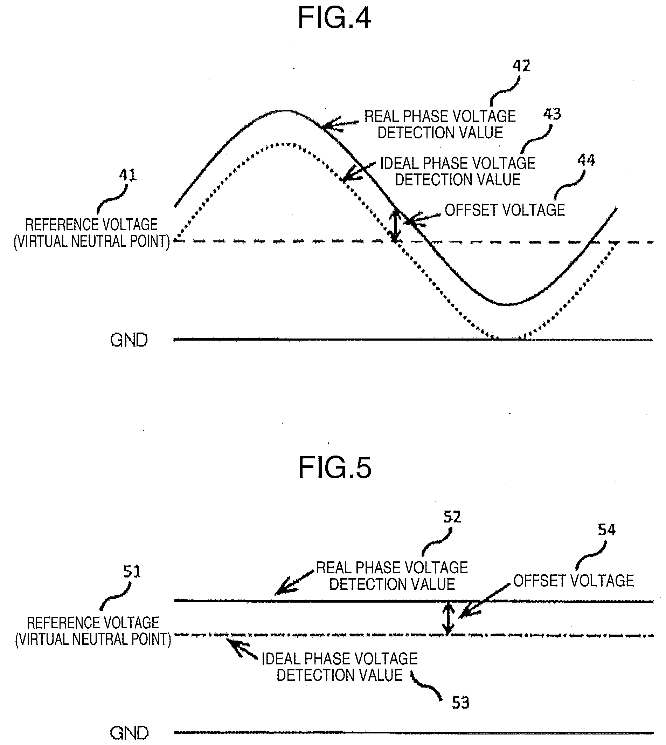

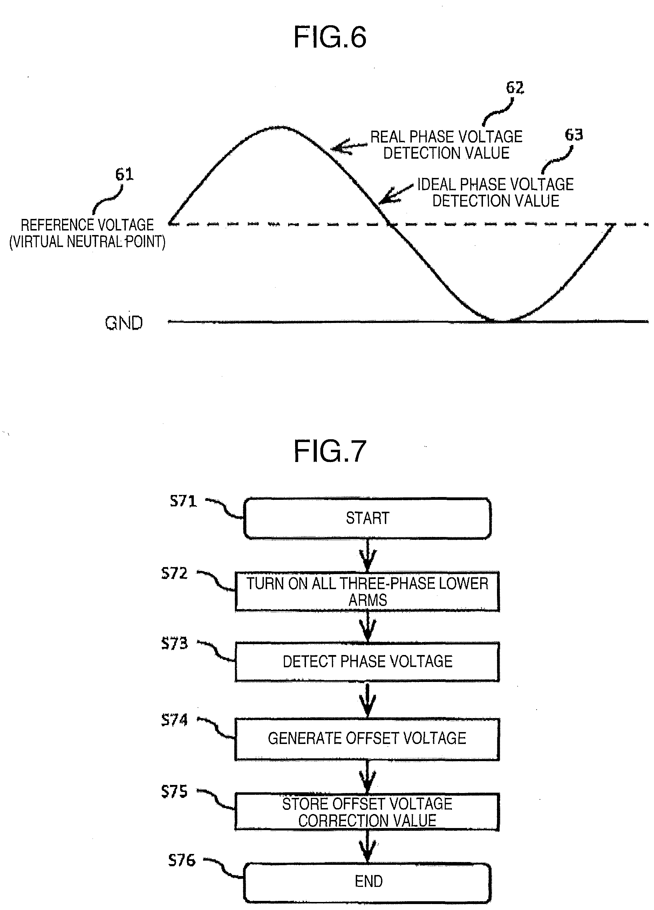

FIG. 3 illustrates an exemplary configuration of the power converter when detecting a phase voltage, FIGS. 4 to 6 illustrate schematic diagrams for one phase of a phase voltage detected by a control unit 34, and FIG. 7 is an exemplary flowchart of the processing of the control unit.

An induced voltage of the motor is in the equilibrium state, and thus assuming the induced voltages of the respective phases in the three-phase motor at Vu, Vv, and Vw and a virtual neutral point at Vneutral, for example, the relationship therebetween is as in Math. 1.

$$(\text{MATH. 1})$$

$$Vu + Vv + Vw = Vneutral = 0$$

A phase voltage generation unit 33 generates a phase voltage by use of the relationship. Specifically, a virtual neutral point generation unit 32 generates a virtual neutral point, and a voltage detection unit 31 and the phase voltage generation unit 33 adjust a voltage gain within a voltage range to be able to be input into the control unit 34. The phase voltage generation unit 33 then generates a phase voltage by use of the virtual neutral point, and sets a reference voltage. The reference voltage can be set at an arbitrary voltage. Further, the virtual neutral point generation method or the voltage gain adjustment method may employ a well-known method, and thus the description thereof will be omitted here.

Thereby, assuming the ideal phase voltage detection values of the respective phases at Vu (ideal), Vv (ideal), and Vw (ideal), a voltage gain at A, and a reference voltage 41 at Vref, the ideal phase voltage detection values 43 detected by the control unit 34 are as in Math. 2 to Math. 4 relative to the reference voltage as illustrated in FIG. 4.

$$(\text{MATH. 2})$$

$$Vu\ (ideal) = A \times Vu + Vref$$

$$(\text{MATH. 3})$$

$$Vv\ (ideal) = A \times Vv + Vref$$

$$(\text{MATH. 4})$$

$$Vw\ (ideal) = A \times Vw + Vref$$

However, an offset voltage is caused in the voltage detection unit 31, the virtual neutral point generation unit 32, and the phase voltage detection unit 33, and thus a phase voltage (real phase voltage detection value) input into the control unit 34 is a value in which the offset voltage 44 is superimposed on the ideal phase voltage detection value 43. Thus, assuming the real phase voltage detection values 42 of the respective phases at Vu (real), Vv (real), and Vw (real) and the offset voltages of the respective phases at Vu (offset), Vv (offset), and Vw (offset), the real phase voltage detection values 42 relative to the reference voltage are as in Math. 5 to Math. 7.

$$\text{(MATH. 5)}$$

$$Vu\ (real) = Vu\ (ideal) + Vu\ (offset)$$

$$\text{(MATH. 6)}$$

$$Vv\ (real) = Vv\ (ideal) + Vv\ (offset)$$

$$\text{(MATH. 7)}$$

$$Vw\ (real) = Vw\ (ideal) + Vw\ (offset)$$

As described above, the real phase voltage detection values include a detection error due to the offset voltage, and thus the offset voltage needs to be detected and subtracted. A flow of the processing of detecting an offset voltage by the control unit will be described with reference to FIGS. 5 to 7.

When detection starts (S71), the three-phase lower arms 208 to 210 as switching devices in the AC conversion unit 203 are turned on (S72) while the output terminal is opened or does not generate a voltage. Thereby, negative potentials are output to all output phases of the power converter to be in the three-phase equilibrium state. Thus, when a phase voltage is detected in the state (S73), a reference voltage 51, a virtual neutral point 51, and an ideal phase voltage detection value 53 are equal as illustrated in FIG. 5 for a voltage input into the control unit 34. However, as described in Math. 5 to Math. 7, a real phase voltage detection value 52 is a value in which an offset voltage 54 is superimposed on the ideal phase voltage detection value 53. As described above, the reference voltage 51 is equal to the ideal phase voltage detection value 53, and thus the real phase voltage detection value 52 is a value in which the offset voltage 54 is added to the reference voltage 51 as indicated in Math. 8 to Math. 10.

$$\text{(MATH. 8)}$$

$$Vu\ (real) = Vref + Vu\ (offset)$$

$$\text{(MATH. 9)}$$

$$Vv\ (real) = Vref + Vv\ (offset)$$

$$\text{(MATH. 10)}$$

$$Vw\ (real) = Vref + Vw\ (offset)$$

Therefore, the control unit 34 subtracts the reference voltage 51 from the real phase voltage detection value 52 thereby to detect the offset voltage 54 (S74). The value is previously stored in a storage unit (not illustrated) as an offset voltage correction value (S75), and the processing ends (S76).

When an induced voltage of the motor is detected, the offset voltage is subtracted from the detected value. Thereby, as illustrated in FIG. 6, an ideal phase voltage detection value 63 and a real phase voltage detection value 62 are equal to each other relative to a reference voltage 61, thereby reducing detection errors due to the offset voltage. The frequency and the phase of the motor are calculated by use of the corrected detected value of the induced voltage, thereby smoothly restarting in a shockless manner.

The method is applicable not only to generate a three-phase voltage but also to generate a two-phase voltage.

SECOND EMBODIMENT

A second embodiment assumes a circuit configuration for generating a virtual neutral point. The motor is connected to the output terminals, and a voltage in the three-phase equilibrium state is input into the power converter. A method for detecting an offset voltage will be described assuming that a reference voltage input into a control unit is equal to a virtual neutral point. A voltage generator capable of inputting a voltage in the three-phase equilibrium state, such as power generator or power supply, other than the motor, may be connected.

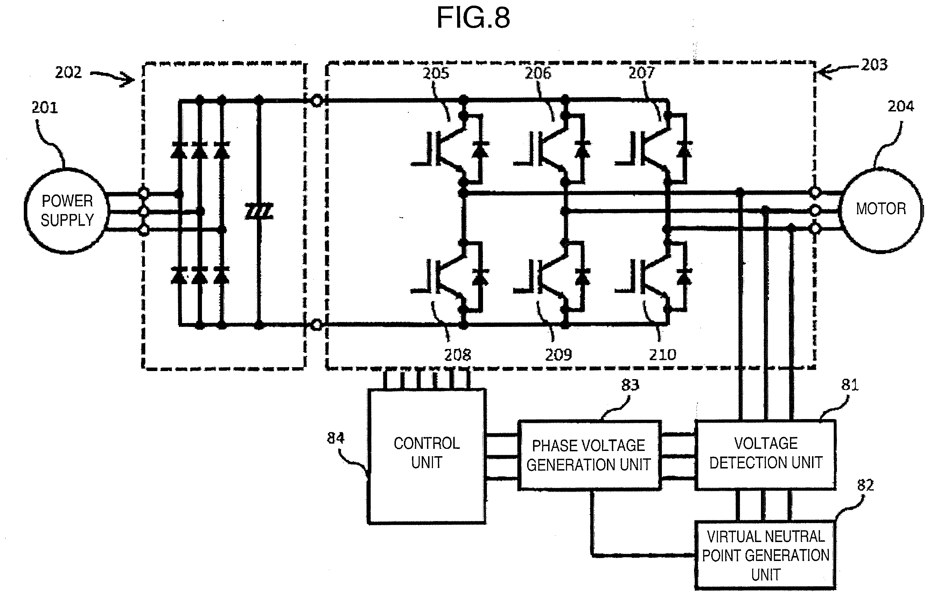

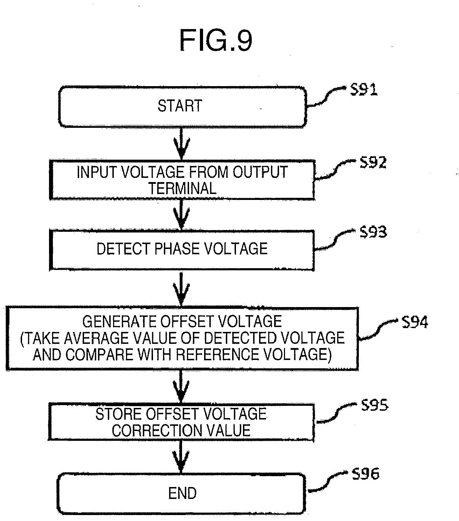

FIG. 8 illustrates an exemplary configuration of the power converter when a voltage is input from the output terminal, and FIG. 9 is a flowchart of the processing of a control unit.

A flow of the processing of detecting an offset voltage by a control unit 84 will be described with reference to FIG. 9. When detection starts (S91), a voltage in the three-phase equilibrium state of the motor 204 is input from the output terminal (S92) while all phases 205 to 210 as switching devices in the AC conversion unit 203 are off. A voltage detection unit 81 detects the voltage, a virtual neutral point generation unit 82 generates a virtual neutral point, and a phase voltage generation unit 83 generates a phase voltage by use of the generated virtual neutral point (S93). As described in Math. 1, it is clear that the voltage in the three-phase equilibrium state takes a three-phase sum 0 like the induced voltage of the motor, and the virtual neutral point potential takes 0. Further, the average value of sine wave AC of the induced voltage or the like takes 0. Therefore, a relationship between the average ideal phase voltage detection value V (ave - ideal), and the virtual neutral point and reference voltage is as in Math. 11.

$$\text{(MATH. 11)}$$

$$\text{Vneutral} = \text{Vref} = \text{V (ave} - \text{ideal)}$$

However, the average phase voltage (average real phase voltage detection value) input into the control unit 84 is a value in which the offset voltage is superimposed on the average ideal phase voltage detection value. Thus, assuming the average real phase voltage detection values of the respective phases at Vu (ave - real), Vv (ave - real), and Vw (ave - real), the average ideal phase voltage detection of the respective phases at Vu (ave - ideal), Vv (ave - ideal), and Vw (ave - ideal), and the offset voltages of the respective phases at Vu (offset), Vv (offset), and Vw (offset), the average real phase voltage detection values are as in Math. 12 to Math. 14.

$$\text{(MATH. 12)}$$

$$\text{Vu (ave} - \text{real)} = \text{Vu (ave} - \text{ideal)} + \text{Vu (offset)}$$

$$\text{(MATH. 13)}$$

$$\text{Vv (ave} - \text{real)} = \text{Vv (ave} - \text{ideal)} + \text{Vv (offset)}$$

$$\text{(MATH. 14)}$$

$$\text{Vw (ave} - \text{real)} = \text{Vw (ave} - \text{ideal)} + \text{Vw (offset)}$$

Here, the average ideal phase voltage detection value V (ave - ideal) is equal to the reference voltage on the basis of Math. 11, and thus the average real phase voltage detection value is a value in which the offset voltage is added to the reference voltage.

$$\text{(MATH. 15)}$$

$$\text{Vu (ave} - \text{real)} = \text{Vref} + \text{Vu (offset)}$$

$$\text{(MATH. 16)}$$

$$\text{Vv (ave} - \text{real)} = \text{Vref} + \text{Vv (offset)}$$

(MATH. 17)

$$Vw\,(ave - real) = Vref + Vw\,(offset)$$

Thus, the control unit 84 subtracts the reference voltage from the average real phase voltage detection value thereby to detect the offset voltage (S94). The value is previously stored in a storage unit (not illustrated) as an offset voltage correction value (S95), and the processing ends (S96).

The offset voltage is then corrected on the basis of the value at which the induced voltage (in the three-phase equilibrium state) of the motor is detected. Thereby, the ideal phase voltage detection value is equal to the real phase voltage detection value, thereby reducing detection errors due to the offset voltage. The frequency and the phase of the motor are calculated by use of the corrected detected value of the induced voltage, thereby smoothly restarting in a shockless manner.

THIRD EMBODIMENT

A third embodiment assumes a circuit configuration for generating a virtual neutral point. There will be described below a method for detecting an offset voltage by use of a DC voltage detection value when a reference voltage input into a control unit is not equal to a virtual neutral point while all three-phase upper arms are turned on.

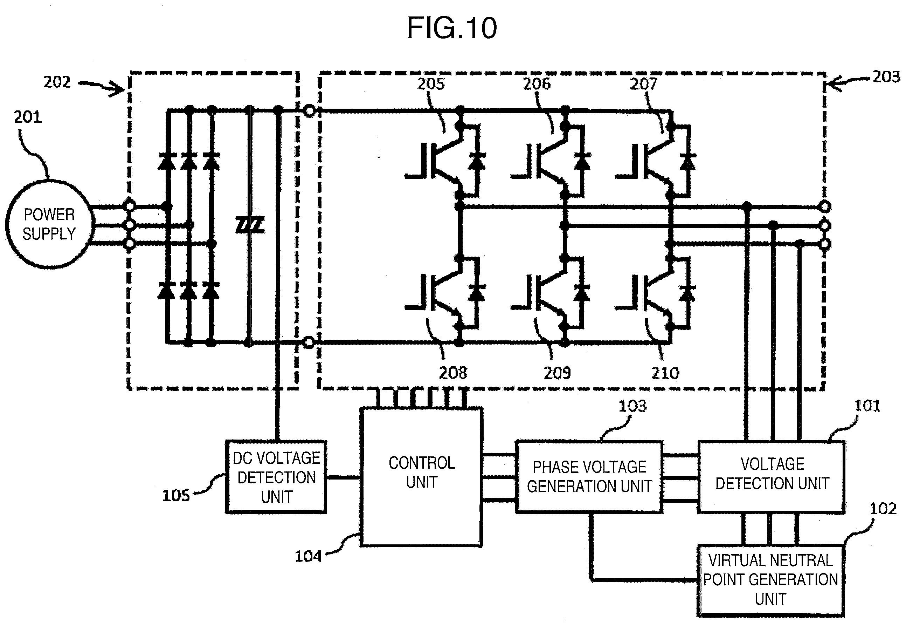

FIG. 10 illustrates a circuit configuration in which a DC voltage detection unit 105 is added to the circuit configuration according to the first embodiment as one method. The DC voltage detection unit 105 is directed for detecting a voltage of a positive potential with reference to a negative potential of the DC conversion unit 202.

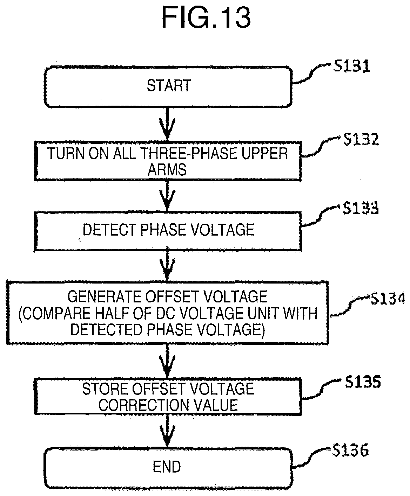

A flow of the processing of detecting an offset voltage by a control unit 104 will be described with reference to FIG. 13. When detection starts (S131), the three-phase upper arms 205 to 207 as switching devices in the AC conversion unit 203 are turned on (S132). If the motor or the like is connected to the output terminal at this time, a voltage is applied to the motor, and thus it is desirable that a voltage is applied in the open state. Thereby, a voltage of positive potential of the DC conversion unit 202 is output to the output terminal, and is applied to a voltage detection unit 101.

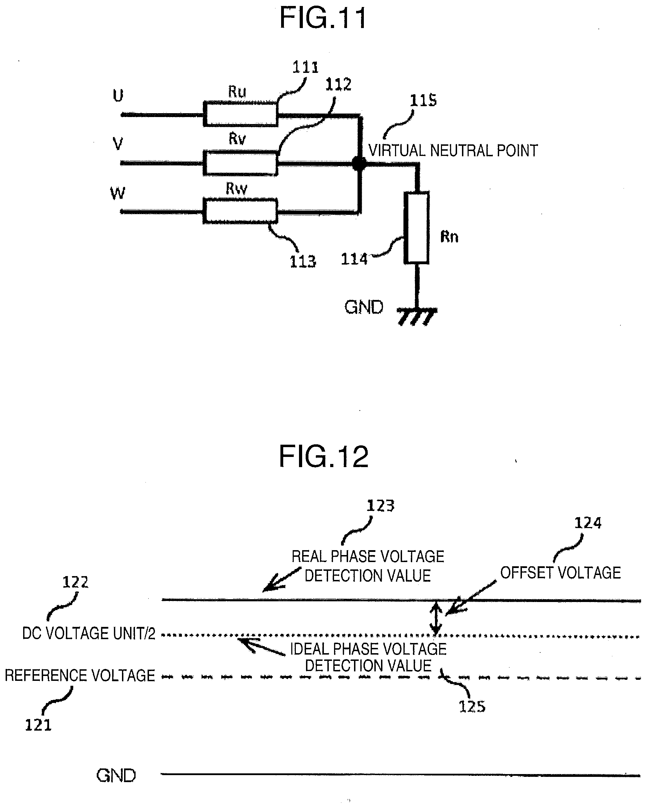

FIG. 11 illustrates an exemplary configuration of a virtual neutral point generation unit 102. With the virtual neutral point generation unit, a voltage of a virtual neutral point 115 is determined by the voltage division ratios between the voltage of the DC conversion unit output from the output terminal of the AC conversion unit 203 and resistors 111 to 114. For example, when a resistor meeting the relationship of Ru (111) = Rv (112) = Rw (113) = 3Rn (114) is connected, the voltage of the virtual neutral point 115 is half the voltage of the DC conversion unit.

Thus, an ideal phase voltage detection value 125 generated by a phase voltage generation unit 103 and input into the control unit 104 is a value in which a value 122, which is half the voltage of the DC conversion unit, is superimposed on a reference voltage 121 as illustrated in FIG. 12. Therefore, assuming the voltage detected by the DC voltage detection unit 105 at Vdc, the ideal phase voltage detection values V (ideal) of the respective phases relative to the reference voltage Vref are as in Math. 18 to Math. 20.

(MATH. 18)

$$Vu\,(ideal) = Vref + Vdc/2$$

(MATH. 19)

$$Vv\,(ideal) = Vref + Vdc/2$$

(MATH. 20)

$$Vw\,(ideal) = Vref + Vdc/2$$

However, the phase voltage (the real phase voltage detection value 123) actually input into the control unit 104 is a value in which an offset voltage 124 is superimposed on the ideal phase voltage detection value 125 as in Math. 21 to Math. 23 (S133).

(MATH. 21)

$$Vu \, (real) = Vref + Vdc/2 + Vu \, (offset)$$

(MATH. 22)

$$Vv \, (real) = Vref + Vdc/2 + Vv \, (offset)$$

(MATH. 23)

$$Vw \, (real) = Vref + Vdc/2 + Vw \, (offset)$$

Here, the DC voltage detection unit 105 inputs the detected voltage Vdc into the control unit 104. The control unit 104 then calculates a value which is half the detected value, and subtracts the value and the reference voltage from the real phase voltage detection value 123 thereby to detect the offset voltage 124 (S134). The value is previously stored in a storage unit as an offset voltage correction value (S135), and the processing ends (S136).

Similarly to the first and second embodiments, when an induced voltage of the motor is detected, the offset voltage is subtracted from the detected value thereby to reduce detection errors due to the offset voltage. The frequency and the phase of the motor are calculated by use of the corrected detected value of the induced voltage, thereby smoothly restarting in a shockless manner.

The method is applicable not only to generate a three-phase voltage but also to generate a two-phase voltage.

REFERENCE SIGNS LIST

| 11 | Voltage detection unit |
|---|---|
| 12 | Detection voltage generation unit |
| 13 | Control unit |
| 201 | AC power supply |
| 202 | DC conversion unit |
| 203 | AC conversion unit |
| 204 to 210 | AC conversion circuit |
| 32, 82, 102 | Virtual neutral point generation unit |
| 33, 83, 103 | Phase voltage generation unit |

**Claims**

1.  A power converter for converting a DC voltage or AC voltage into an arbitrary voltage, comprising:

    a voltage detector for detecting a voltage of an output terminal of the power converter;
    a detection voltage generation unit for converting the voltage detected by the voltage detector into an arbitrary voltage; and
    a control unit for detecting an offset voltage caused in the detection voltage generation unit by use of the voltage converted by the detection voltage generation unit,
    wherein the voltage detector detects an induced voltage caused by a motor, and
    the control unit corrects the detected value of the induced voltage by use of the offset voltage.

2.  The power converter according to claim 1,
    wherein the voltage detector detects a voltage output by the power converter, and the control unit detects the offset voltage by use of the detected voltage.

3.  The power converter according to claim 2, comprising:

a virtual neutral point generation unit for generating a virtual neutral point,
wherein the power converter outputs negative potentials to all output phases of the power converter,
the detection voltage generation unit generates phase voltages of all output phases from the voltage detected by the voltage detector by use of the virtual neutral point, and
the control unit detects the offset voltage by use of the phase voltages.

4. The power converter according to claim 2, comprising:

a virtual neural point generation unit for generating a virtual neutral point; and
a DC voltage detector for detecting a DC voltage of the power converter,
wherein the power converter outputs positive potentials to all output phases of the power converter,
the detection voltage generation unit generates phase voltages of all output phases from the voltage detected by the voltage detector by use of the virtual neutral point, and
the control unit detects the offset voltage by use of the phase voltages and the detected DC voltage.

5. The power converter according to claim 1,
wherein the output terminal of the power converter is connected with a motor, a power generator, or a power supply,
the voltage detector detects a voltage input into the power converter from the output terminal, and
the control unit detects the offset voltage by use of the input voltage.

6. The power converter according to claim 1,
wherein a frequency and a phase of the motor are calculated by use of the corrected detected value of the induced voltage.

## FIG.1

EP 3 471 258 A1

# FIG.2

REAL DETECTION VOLTAGE

IDEAL DETECTION VOLTAGE

OFFSET VOLTAGE

REFERENCE VOLTAGE

GND

FIG.3

# FIG.4

REAL PHASE VOLTAGE DETECTION VALUE (42)

IDEAL PHASE VOLTAGE DETECTION VALUE (43)

OFFSET VOLTAGE (44)

REFERENCE VOLTAGE (VIRTUAL NEUTRAL POINT) (41)

GND

# FIG.5

REAL PHASE VOLTAGE DETECTION VALUE (52)

OFFSET VOLTAGE (54)

REFERENCE VOLTAGE (VIRTUAL NEUTRAL POINT) (51)

IDEAL PHASE VOLTAGE DETECTION VALUE (53)

GND

# FIG.6

62

REAL PHASE VOLTAGE
DETECTION VALUE

63

IDEAL PHASE VOLTAGE
DETECTION VALUE

61

REFERENCE VOLTAGE
(VIRTUAL NEUTRAL POINT)

GND

# FIG.7

S71 — START

S72 — TURN ON ALL THREE-PHASE LOWER
ARMS

S73 — DETECT PHASE VOLTAGE

S74 — GENERATE OFFSET VOLTAGE

S75 — STORE OFFSET VOLTAGE
CORRECTION VALUE

S76 — END

# FIG.8

EP 3 471 258 A1

# FIG.9

```
      ┌────────────────────────────────┐
      │            START               │  ─── S91
      └────────────────────────────────┘
                      │
                      ▼
      ┌────────────────────────────────┐
      │   INPUT VOLTAGE FROM OUTPUT     │  ─── S92
      │           TERMINAL             │
      └────────────────────────────────┘
                      │
                      ▼
      ┌────────────────────────────────┐
      │      DETECT PHASE VOLTAGE       │  ─── S93
      └────────────────────────────────┘
                      │
                      ▼
  ┌────────────────────────────────────────┐
  │         GENERATE OFFSET VOLTAGE         │  ─── S94
  │ (TAKE AVERAGE VALUE OF DETECTED VOLTAGE │
  │  AND COMPARE WITH REFERENCE VOLTAGE)    │
  └────────────────────────────────────────┘
                      │
                      ▼
      ┌────────────────────────────────┐
      │      STORE OFFSET VOLTAGE       │  ─── S95
      │        CORRECTION VALUE         │
      └────────────────────────────────┘
                      │
                      ▼
      ┌────────────────────────────────┐
      │             END                │  ─── S96
      └────────────────────────────────┘
```

FIG.10

# FIG.11

111
112
115

U    Ru

V    Rv    VIRTUAL NEUTRAL POINT

W    Rw

113    114    Rn

GND

# FIG.12

123
124

REAL PHASE VOLTAGE
DETECTION VALUE    OFFSET VOLTAGE

122

DC VOLTAGE UNIT/2 ········    IDEAL PHASE VOLTAGE
DETECTION VALUE

REFERENCE VOLTAGE ── ── ── ── ── ── ──    125

121

GND ─────────────────────

# FIG.13

START ~S131

TURN ON ALL THREE-PHASE UPPER ARMS ~S132

DETECT PHASE VOLTAGE ~S133

GENERATE OFFSET VOLTAGE
(COMPARE HALF OF DC VOLTAGE UNIT WITH
DETECTED PHASE VOLTAGE) ~S134

STORE OFFSET VOLTAGE
CORRECTION VALUE ~S135

END ~S136

<table>
<tr><td colspan="2" align="center">**INTERNATIONAL SEARCH REPORT**</td><td>International application No.<br>PCT/JP2016/067305</td></tr>
</table>

**A. CLASSIFICATION OF SUBJECT MATTER**
*H02M7/48(2007.01)i*

According to International Patent Classification (IPC) or to both national classification and IPC

**B. FIELDS SEARCHED**

Minimum documentation searched (classification system followed by classification symbols)
H02M7/48

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2009-27900 A  (Yaskawa Electric Corp.),<br>05 February 2009 (05.02.2009),<br>abstract; paragraphs [0007] to [0013]; fig. 1,<br>2<br>(Family: none) | 1,2,6<br>3-5 |
| X<br>A | JP 2009-254093 A  (Fuji Electric Systems Co.,<br>Ltd.),<br>29 October 2009 (29.10.2009),<br>abstract; paragraphs [0011] to [0022]; fig. 1,<br>3<br>(Family: none) | 1,2,6<br>3-5 |
| A | JP 2013-513119 A  (Robert Bosch GmbH),<br>18 April 2013 (18.04.2013),<br>& WO 2011/069825 A1    & DE 102009047608 A1<br>& CN 102656473 A | 1-6 |

☐ Further documents are listed in the continuation of Box C.        ☐ See patent family annex.

| | | |
|---|---|---|
| * | Special categories of cited documents: | |
| "A" | document defining the general state of the art which is not considered    to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search<br>    12 August 2016 (12.08.16) | Date of mailing of the international search report<br>    23 August 2016 (23.08.16) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**EP 3 471 258 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009254093 A